# DEMANDE DE BREVET EUROPEEN

(11) **EP 3 093 631 A1**
(43) Date de publication de la demande: **16.11.2016**
(21) Numéro de dépôt: 15305712.0
(22) Date de dépôt: 12.05.2015
(51) Int. Cl.: G01G 21/22

(54) **BALANCE DE MENAGE AVEC RECIPIENT AMOVIBLE A STOCKAGE OPTIMISE**

(71) Demandeur: SEB S.A., 69130 Ecully (FR)
(72) Inventeur: Thirouin, Stéphane, 69004 Lyon (FR); Sarrazin, Michel, 74150 Massingy (FR)
(74) Mandataire: Guéry-Jacques, Géraldine

(57) **Abrégé**

L'invention concerne une balance (10) de ménage comprenant :
- un boitier (1) destiné à être posé horizontalement lors de l'utilisation, ledit boîtier (1) comportant un support (4),
- au moins un système de mesure du poids relié à une unité d'affichage (3) de résultat lié à la mesure,
- la balance étant destinée à recevoir sur ledit support (4), lors de l'utilisation, un récipient (20) pour contenir un article ou un ingrédient,

Selon l'invention, ledit boîtier (1) comprend des moyens de liaison (11) audit support (4) permettant audit support (4) de recevoir ledit récipient (20) selon les deux positions suivantes:
- Une position de stockage dans laquelle le récipient (20) est maintenu attaché au support (4) quelle que soit la position de la balance dans l'espace,
- Une position d'utilisation dans laquelle le récipient (20) est posé non attaché sur le support (4).

## Description

La présente invention concerne le domaine technique des appareils de pesage, plus particulièrement une balance de ménage.

Les appareils du type précité comportent généralement un plateau apte à recevoir un poids, un dispositif de mesure du poids présent sur le plateau comprenant un moyen d'affichage pour afficher le poids mesuré et des moyens de commande ou de réglage.

Dans l'utilisation d'un tel appareil de pesage, il s'avère nécessaire d'utiliser un récipient destiné à contenir le ou les ingrédients ou articles à peser afin que ceux-ci ne soient pas en contact direct avec le plateau pour des raisons d'hygiène, de praticité et de nettoyabilité. Ceci est particulièrement nécessaire dans la mesure où l'ingrédient à peser est en vrac et se tient difficilement sur le plateau. Il peut s'agir par exemple d'ingrédients solides tels que farine, sucre en poudre ou en morceaux, ou d'ingrédients liquides.... Dans ce cas, ledit récipient est pesé en même temps que l'aliment et l'affichage du résultat prend en compte une réduction du poids de récipient. Le récipient est souvent amovible de l'appareil de pesage pour faciliter le nettoyage du récipient et le transport de l'aliment à peser.

On connait de nombreux produits sur le marché qui concernent une balance de cuisine vendue avec un récipient amovible. Cependant, sans aucun moyen d'attache, l'appareil doit rester en position d'utilisation, c'est-à-dire à horizontal, pour maintenir le récipient en place par gravité même hors utilisation. Il est impossible de ranger la balance avec le récipient attaché dans une position autre que celle d'utilisation, par exemple la suspension murale. Ce type d'appareil a donc pour inconvénient un manque de commodité dans son rangement.

Le but de la présente invention est de proposer un appareil de pesage facile à ranger et à déplacer et ce, avec son récipient amovible.

Un autre but de l'invention est un appareil de pesage à l'encombrement réduit lors de son rangement ou son déplacement.

Un autre but de l'invention est un récipient contenant des articles à peser adapté à une suspension murale tout en restant attaché à un appareil de pesage.

Ces buts sont atteints avec une balance de ménage comprenant :
- un boitier destiné à être posé horizontalement lors de l'utilisation, ledit boîtier comportant un support d'un article ou ingrédient à peser,
- au moins un système de mesure du poids relié à une unité d'affichage de résultat lié à la mesure,
- la balance étant destinée à recevoir sur ledit support, lors de l'utilisation, un récipient pour contenir un article ou un ingrédient,

Selon l'invention, ledit boîtier comprend des moyens de liaison audit support permettant audit support de recevoir ledit récipient selon les deux positions suivantes :
- Une position de stockage dans laquelle le récipient est maintenu attaché au support quelle que soit la position de la balance dans l'espace,
- Une position d'utilisation dans laquelle le récipient est posé non attaché sur le support.

On entend par « récipient » un contenant type assiette présentant un fond sensiblement plat et des bords inclinés, permettant de retenir un ingrédient à peser en vrac. Lorsque le récipient est maintenu attaché au support en mode stockage-déplacement, le récipient suit le mouvement et la position du support sans tomber. Lorsque le récipient est posé sur le support en mode pesage, le récipient ne subit que la gravité et peut être déplacé facilement du support car il n'est pas attaché au support, il peut être glissé sur le support. Ainsi, la balance peut être rangée dans une autre position que celle horizontale sans que le récipient soit à part : le récipient reste en contact solidaire avec le support dans n'importe quelle position. Par exemple, la balance peut être accrochée ou suspendue au mur avec le récipient sans que le récipient tombe.

Avantageusement, lesdits moyens de liaison exercent une force magnétique et le récipient comporte des moyens de liaison complémentaires subissant ladite force magnétique, de sorte que ladite force magnétique permet de retenir le récipient uniquement lorsque celui-ci est en position de stockage. Les moyens de liaison complémentaires sont prévus pour subir - respectivement ne pas subir - la force magnétique des moyens de liaison grâce à une distance de référence entre les deux moyens permettant aux moyens de liaison d'agir en position de stockage sur les moyens de liaison complémentaires et -respectivement permettant aux moyens de liaison de ne pas agir en position de stockage sur les moyens de liaison complémentaires. Une distance de séparation étudiée selon les deux positions et en fonction de la force magnétique est prévue.

Ainsi, aucune force magnétique ne s'exerce lorsque le récipient est en position de fonctionnement au dessus du support, son bord relevé vers le haut. L'utilisation de moyens magnétiques pour le maintien du récipient sur la balance permet un encombrement du produit moindre. Ceci a également pour avantage un aspect plus esthétique. Ceci évite aussi tout moyen d'attache protubérant du support ou du récipient et qui pourrait se salir ou casser lors d'une mauvaise manipulation de la balance.

Selon un premier mode de réalisation, les moyens de liaison comprennent au moins un aimant permanent. Les moyens de liaison complémentaires comprennent au moins une partie composée de matériau ferromagnétique.

Plus précisément, selon une variante, ledit support présente une première surface plane et un premier chanfrein périphérique à la première surface plane et ledit au moins un aimant est agencé adjacent au chanfrein, et le récipient présente une deuxième surface plane et un deuxième chanfrein périphérique à la deuxième surface plane et ladite au moins une partie est agencée à sa périphérie.

Lesdits chanfreins présentent une forme de talus. Le fait de mettre les moyens actifs et passifs au niveau des chanfreins et à la périphérie permet d'optimiser la répartition de force et le nombre de matériels utilisés. Aussi, la force agit uniquement au niveau du chanfrein, à la périphérie du support.

Selon une caractéristique de ce mode de réalisation, ledit au moins un aimant présente une forme parallélépipédique dont au moins une face est sensiblement parallèle audit premier chanfrein.

L'aimant se trouvant en dessous de la surface plane du support, une distance est créée pour qu'aucune force magnétique ne soit exercée au niveau de la surface plane du support, ou bien que la force magnétique soit suffisamment faible pour ne pas gêner la mobilité du récipient. Cette configuration permet de maintenir le récipient par force magnétique uniquement en position de stockage.

Avantageusement, les moyens de liaison comprennent au moins deux aimants permanents ; les moyens de liaison complémentaires comprennent au moins deux parties métalliques ; les aimants et parties métalliques étant agencés pour que l'aimant et la partie métallique de chaque couple soient en regard l'un de l'autre en position de stockage.

L'aimant et la partie métallique peuvent alors se mettre face à face pour que la force magnétique soit exercée de façon maximale. Ceci permet d'optimiser la force magnétique en position de stockage.

Afin d'équilibrer davantage l'attraction magnétique, les aimants et parties métalliques sont répartis régulièrement sur la périphérie du support et du récipient.

De surcroît, le premier chanfrein et le deuxième chanfrein sont orientés pour être sensiblement parallèles en position de stockage. Ainsi, en position de stockage, le récipient recouvre sensiblement la totalité du support, c'est à dire, la deuxième surface plane recouvre la première surface plane et le deuxième chanfrein recouvre le premier chanfrein.

Selon une caractéristique de ce mode de réalisation, le premier chanfrein et le deuxième chanfrein sont orientés selon un angle (α) compris entre 20° et 70° par rapport aux surfaces planes en position d'utilisation, plus particulièrement entre 40° et 50°, par exemple égal à 45°. Une telle géométrie des chanfreins permet un maintien plus solide.

Selon une autre caractéristique de ce mode de réalisation, le support a une forme de disque avec une périphérie en chanfrein et le récipient a une forme de disque avec une périphérie en chanfrein. Ainsi, le support et le récipient présentent respectivement une surface plane sensiblement circulaire et un chanfrein périphérique sensiblement circulaire.

Avantageusement, le nombre d'aimants est supérieur à trois, par exemple égal à cinq afin d'accentuer la force magnétique pour un attachement plus solide et stable. Les aimants peuvent alors être identiques.

Selon une caractéristique de ce mode de réalisation, au moins le deuxième chanfrein périphérique est entièrement métallique, plus particulièrement tout le récipient est métallique.

Selon un deuxième mode de réalisation, ledit support présente une première surface plane et lesdits moyens de liaison sont agencés adjacents à ladite surface plane, et ledit récipient présente un fond plan et une paroi inclinée, ladite au moins une partie composée de matériau ferromagnétique étant agencée au niveau dudit fond plan.

Avantageusement, ledit récipient comprend entre ladite paroi inclinée et le fond plan des moyens de distanciation du support permettant d'écarter le fond plan de la première surface plane d'une distance (d) comprise entre 2mm et 5mm en position d'utilisation.

De surcroît, lesdits moyens de distanciation comprennent des plis en protubérance par rapport au fond plan destinés à prendre contact avec le support en position d'utilisation.

Selon une caractéristique de ce mode de réalisation, la première surface plane a une forme circulaire et le récipient a une forme de disque avec une périphérie en paroi inclinée, le diamètre le plus grand de la paroi inclinée étant supérieur à celui de la première surface plane.

Avantageusement, au moins le fond plan est entièrement métallique, plus particulièrement tout le récipient est métallique.

Selon les deux modes de l'invention, la balance comprend sur le boîtier un moyen d'accrochage tel qu'un crochet permettant une suspension murale.

Ces buts sont également atteints avec un ensemble comprenant une balance de ménage et au moins un récipient à savoir que le récipient peut présenter les caractéristiques suivantes :
- le récipient comporte des moyens de liaison complémentaires subissant ladite force magnétique, de sorte que ladite force magnétique permet de retenir le récipient uniquement lorsque celui-ci est en position de stockage,
- le récipient présente une deuxième surface plane et un deuxième chanfrein périphérique à la deuxième surface plane et ladite au moins une partie est agencée à la périphérie,
- les moyens de liaison complémentaires comprennent au moins une partie composée de matériau ferromagnétique,
- les moyens de liaison complémentaires comprennent au moins deux parties métalliques, les aimants et parties métalliques étant agencés pour que l'aimant et la partie métallique de chaque couple soient en regard l'un de l'autre en position de stockage,
- le premier chanfrein et le deuxième chanfrein sont orientés pour être sensiblement parallèles en position de stockage,
- le premier chanfrein et le deuxième chanfrein sont orientés selon un angle compris entre 20° et 70° par rapport aux surfaces planes en position d'utilisation, plus particulièrement entre 40° et 50°, par exemple égal à 45°,
- le récipient a une forme de disque avec une périphérie en chanfrein,
- au moins le deuxième chanfrein périphérique est entièrement métallique, plus particulièrement tout le récipient est métallique,
   ou
- ledit support présente une première surface plane et lesdits moyens de liaison sont agencés adjacents à ladite surface plane, et ledit récipient présente un fond plan et une paroi inclinée, ladite au moins une partie composée de matériau ferromagnétique étant agencée au niveau dudit fond plan.
- Ledit récipient comprend entre ladite paroi inclinée et le fond plan des moyens de distanciation du support permettant d'écarter le fond plan de la première surface plane d'une distance (d) comprise entre 2mm et 5mm en position d'utilisation.
- Lesdits moyens de distanciation comprennent des plis en protubérance par rapport au fond plan destinés à prendre contact avec le support en position d'utilisation.
- La première surface plane a une forme circulaire et le récipient a une forme de disque avec une périphérie en paroi inclinée, le diamètre le plus grand de la paroi inclinée étant supérieur à celui de la première surface plane.
- au moins le fond plan est entièrement métallique, plus particulièrement tout le récipient est métallique.

L'invention sera mieux comprise à l'étude des modes de réalisation pris à titre nullement limitatif et illustrés par les dessins annexés dans lesquels :
- La figure 1 est une perspective de la balance sans le récipient selon un premier mode de réalisation,
- La figure 2 est une perspective de la balance avec le récipient posé sur le support, en position d'utilisation selon le premier mode de réalisation,
- La figure 3 est une vue en éclaté de la balance et le récipient en position d'utilisation selon le premier mode de réalisation,
- La figure 4 est un schéma des deux positions que peut prendre le récipient selon le premier mode de réalisation,
- La figure 5 est une vue détaillée de la balance avec le récipient posé sur le support, en position de stockage selon le premier mode de réalisation.
- La figure 6 est une vue de coupe de la balance avec le récipient en position d'utilisation selon un deuxième mode de réalisation,
- La figure 7 est une vue de coupe de la balance avec le récipient en position de stockage selon le deuxième mode de réalisation,
- La figure 8 est une vue schématique en demi coupe de profil de la balance avec le récipient en position d'utilisation selon le deuxième mode de réalisation,
- Les figures 9 et 10 illustrent un troisième mode de réalisation de l'invention.

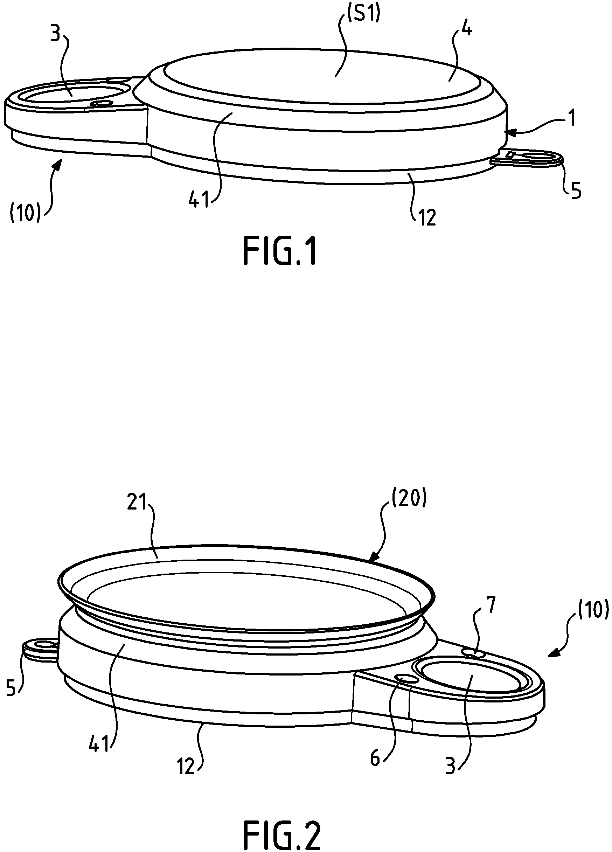

Une balance de ménage telle qu'illustrée à la figure 1 et désignée dans son ensemble par la référence 10 comporte un boîtier 1 définissant un châssis 12 de forme généralement circulaire destiné à reposer sur un plan de travail de façon horizontale lors de l'utilisation, un support 4 sous forme d'un plateau rond supporté par le châssis 12. La balance 10 comprend encore un dispositif de pesage comportant au moins un capteur de poids relié à un système de mesure du poids relié à une unité d'affichage 3 de résultat lié à la mesure. L'unité d'affichage 3 peut comprendre un afficheur à cristaux liquides. Autour de l'unité d'affichage 3 sont disposées des touches de commande 6, 7 de différentes fonctions. La balance 10 comprend à l'extrémité du boîtier 1 un moyen d'accrochage 5 ayant une forme de demi -cercle ou demi-anneau permettant une suspension murale.

Ledit châssis 12 supporte le dispositif de pesage qui comporte un circuit électronique 8 alimenté par des batteries et des capteurs assemblés dans le châssis 12. Les capteurs comprennent des jauges de contraintes reliées au circuit électronique 8 par des câblages. Lors d'une pesée d'un poids, les jauges de contraintes se déforment sous l'action du poids et modifient le signal électrique mesuré par le circuit électronique 8 qui calcule alors le poids présent sur le support 4 et l'affiche sur l'afficheur.

La construction du dispositif de pesage est décrite en détail dans le document FR2932565 au nom de la demanderesse et ne nécessite pas une plus ample description.

Tel qu'illustré à la figure 2, et selon un premier mode de réalisation, un récipient 20 est à la disposition de l'utilisateur pour y mettre l'article ou l'ingrédient à peser. Ledit récipient 20 présente une forme type assiette avec un fond plat circulaire et un bord et peut être déplacé facilement pendant l'utilisation pour transporter le poids à peser ou pour le nettoyage.

En ce qui concerne la géométrie de la balance et du récipient, comme décrit plus haut, le support présente une première surface plane (S1) et un premier chanfrein 41 périphérique tandis que le récipient présente une deuxième surface plane (S2) et un deuxième chanfrein 21 périphérique. Les deux surfaces planes (S1, S2) présentent sensiblement le même diamètre pour que l'une soit à l'aplomb de l'autre lorsque le récipient 20 est posé sur le support 4.

La figure 2 illustre la position d'utilisation dans laquelle le récipient 20 est posé librement sur le support 4. Le récipient 20 peut aussi prendre une autre position dite position de stockage dans laquelle le récipient 20 est maintenu attaché au support par la force magnétique. Dans cette position, le récipient est capable de suivre la position de la balance même si celle-ci se trouve dans une autre position que l'horizontale, par exemple quand la balance est suspendue au mur.

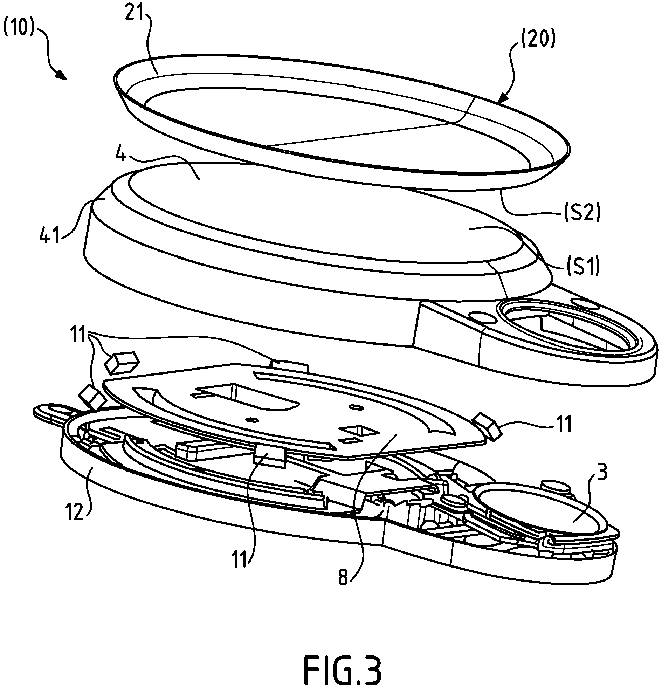

Pour ce faire et tel que visible à la figure 3, le support 4 comprend des moyens de liaison 11 comprenant une série de cinq aimants 11 permanents exerçant une force magnétique, les aimants 11 étant répartis de façon régulière sur la périphérie du support 4 au niveau du premier chanfrein 41. Afin que le récipient 20 puisse être maintenu attaché en position de stockage, il comprend des moyens de liaison complémentaires 21 sur le deuxième chanfrein 21 périphérique subissant la force magnétique. Lesdits moyens de liaison complémentaires 21 comprennent au moins une partie 21 composée de matériau ferromagnétique. Afin de simplifier la construction, le récipient est entièrement métallique ferromagnétique ou du moins, le deuxième chanfrein 21 périphérique est entièrement métallique ferromagnétique.

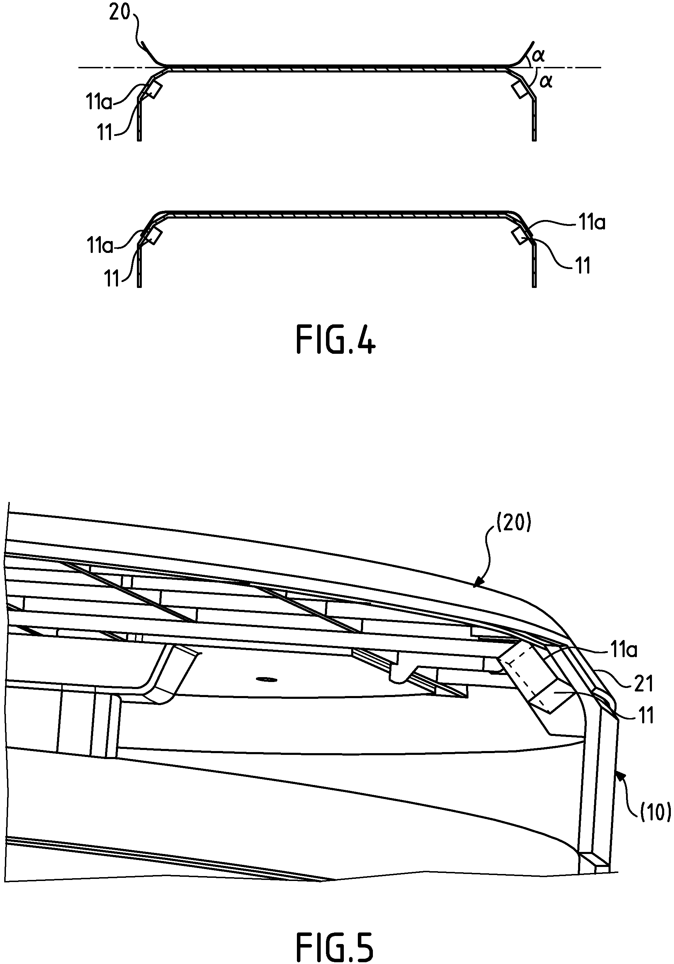

De plus, le premier et le deuxième chanfrein sont orientés selon un angle a par rapport aux surfaces planes qui est égal sensiblement à 45° tel que dans l'exemple illustré à la figure 4. Ainsi, les deux chanfreins sont sensiblement parallèles en position de stockage.

Tel que visible aux figures 4 et 5, chaque aimant présente une forme parallélépipédique dont au moins une face 11a est sensiblement parallèle au premier chanfrein 41. Les aimants sont alors agencés à l'intérieur du support au niveau du chanfrein et ne prennent pas contact avec, ou du moins n'exercent pas de force magnétique sur la première surface plane (S1). C'est-à-dire, les aimants 11 sont fonctionnels uniquement en position de stockage lors que le récipient 20 est mis à l'envers comme à la figure 5.

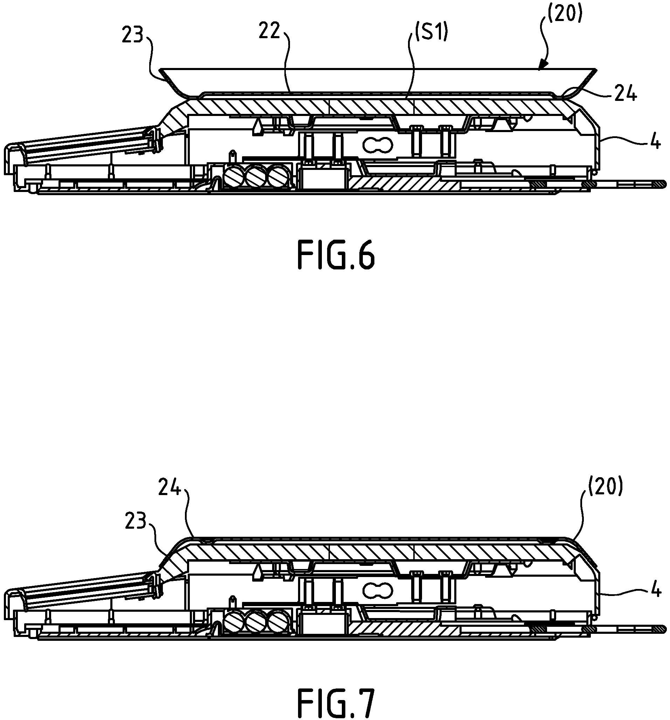

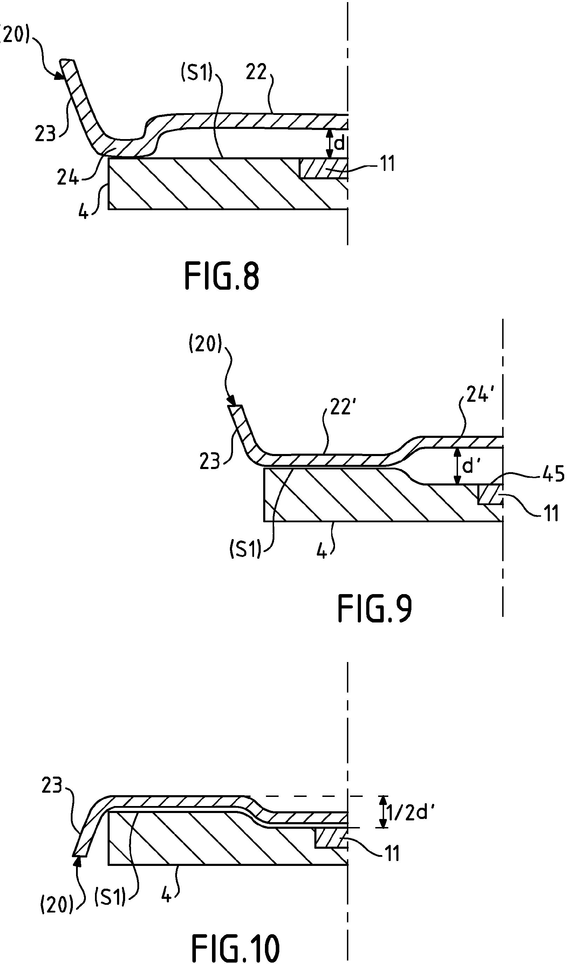

Selon le deuxième mode de réalisation, et tel que visible aux figures 6 à 8, le support 4 présente une première surface plane (S1) destinée à recevoir le récipient 20. Ledit récipient 20 selon le deuxième mode de réalisation présente un fond plan 22 et une paroi inclinée 23. De plus, le récipient 20 présente des moyens de distanciation 24 du support 4 qui sont des plis en protubérance 24 par rapport au fond plan 22 du coté opposé à la paroi inclinée 23. Ainsi, lorsque le récipient 20 est posé sur la première surface plane (S1) du support 4 en position d'utilisation, les plis en protubérance 24 prennent contact avec le support 4 ce qui permet d'écarter le fond plan 22 de la première surface plane (S1) d'une distance d tel que visible à la figure 8. Cette distance d'entrefer permet d'échapper à l'attraction magnétique, elle est comprise entre 2mm et 5mm. La position d'utilisation selon le deuxième mode de réalisation est illustrée à la figure 6.

Lorsque le récipient 20 est en position de stockage, celui-ci peut être retourné pour être posé sur le support 4 comme montré en figure 7. Cette fois-ci, c'est le fond plan 22 du récipient qui prend contact avec la première surface plane (S1). Pour ceci, la paroi inclinée 23 présente un périmètre plus grande que celui de la première surface plane (S1). Par exemple, dans le cas où le fond plan 22 et la première surface plane (S1) sont de forme carrée ou rectangulaire, les largeurs de la paroi inclinée 23 sont supérieures aux largeurs de la première surface plane (S1) correspondantes.

Selon l'exemple montré, la première surface plane (S1) a une forme circulaire et le récipient 20 prend la forme d'un disque avec le fond plan 22 et la paroi inclinée 23 circulaires. Dans cette configuration, le diamètre le plus grand de la paroi inclinée 23 est supérieur que celui de la première surface plane (S1).

Pour que le récipient 20 soit maintenu en position de stockage à n'importe quelle position de la balance, au moins un aimant 11 est agencé adjacent à ladite première surface plane (S1) et les moyens de liaison complémentaires 22 comprennent au moins une partie 22 constituée du métal ferromagnétique situé sur le fond plan 22. Afin de faciliter la fabrication, le récipient est entièrement métallique ferromagnétique ou du moins, le fond plan 22 est entièrement métallique ferromagnétique. Dans l'illustration, l'aimant 11 est agencé au centre du support 4, mais il peut être agencé sur toute la surface du support 4 et suffisamment éloigné des moyens de distanciation.

Selon un troisième mode de réalisation, et tel qu'illustré aux figures 9 et 10, le récipient 20 présente un fond plan 22' et une paroi inclinée 23. De plus, le récipient 20 présente des moyens de liaison complémentaires 24' du support 4 présentés sous forme d'une zone centrale en protubérance 24' d'une distance 1/2d' par rapport au fond plan 22' et du même coté que la paroi inclinée 23. Tandis que le support 4 présente une première surface plane (S1) et une zone centrale creuse 45 ayant une forme complémentaire à celle de la zone centrale en protubérance 24' du récipient 20. La profondeur de ladite zone centrale creuse 45 est de 1/2d'. Ainsi, lorsque le récipient 20 est posé sur la première surface plane (S1) du support 4 en position d'utilisation, le fond plan 22' prend contact avec la surface plane (S1) et la zone centrale en protubérance 24' est écartée de la zone centrale creuse 45 d'une distance d' tel que visible à la figure 9. Cette distance d'entrefer d' permet d'échapper à l'attraction magnétique, elle est comprise entre 2mm et 5mm.

Lorsque le récipient 20 est en position de stockage, celui-ci peut être retourné pour être posé sur le support 4 comme montré en figure 10. Cette fois-ci, l'ensemble du fond plan 22' et la zone centrale en protubérance 24' du récipient prennent contact respectivement avec la première surface plane (S1) et la zone centrale creuse 45 du support 4. Pour ceci, la paroi inclinée 23 présente un périmètre plus grand que celui de la première surface plane (S1). Par exemple, dans le cas où le fond plan 22 et la première surface plane (S1) sont de forme carrée ou rectangulaire, les largeurs de la paroi inclinée 23 sont supérieures aux largeurs de la première surface plane (S1) correspondantes.

Selon l'exemple montré, la première surface plane (S1) a une forme circulaire et le récipient 20 prend la forme d'un disque avec le fond plan 22' et la paroi inclinée 23 circulaires. Dans cette configuration, le diamètre le plus grand de la paroi inclinée 23 est supérieur à celui de la première surface plane (S1).

Pour que le récipient 20 soit maintenu en position de stockage dans n'importe quelle position de la balance, au moins un aimant 11 est agencé adjacent à ladite première surface plane (S1) dans la zone centrale creuse 45 et les moyens de liaison complémentaires 24' comprennent au moins une partie 24' constituée du métal ferromagnétique situé sur la zone centrale en protubérance 24'. Afin de faciliter la fabrication, le récipient est entièrement métallique ferromagnétique ou du moins la zone centrale en protubérance 24' est entièrement métallique ferromagnétique. Dans l'illustration, l'aimant 11 est agencé au centre du support 4, mais il peut être agencé sur toute la zone centrale creuse 45.

Selon l'invention, les aimants possèdent des caractéristiques permettant de respecter le gabarit de la balance tout en assurant l'attachement du récipient. Par exemple, chaque aimant présente une dimension de 6x8x17mm, et un niveau d'induction magnétique rémanente de 0.4 à 1.4 Tesla. Les aimants sont attachés au support par collage mais pourraient être attachés par tout autre mode de fixation à la portée de l'homme du métier, par exemple le bouterollage.

Pour une utilisation aisée et intuitive pour l'utilisateur, il est envisageable un ensemble de pesage comprenant une balance et un récipient tels que décrits plus haut. La balance et le récipient présentent chacun des caractéristiques géométriques et techniques permettant que le récipient puisse prendre les deux positions, c'est-à-dire la position d'utilisation et la position de stockage. Le récipient peut également être proposé individuellement en tant que pièce de rechange en cas de perte ou d'endommagement de celui-ci.

Bien entendu, diverses autres modifications peuvent être apportées à l'invention dans le cadre des revendications annexées.

## Revendications

1. Balance (10) de ménage comprenant :
- un boitier (1) destiné à être posé horizontalement lors de l'utilisation, ledit boîtier (1) comportant un support (4),
- au moins un système de mesure du poids relié à une unité d'affichage (3) de résultat lié à la mesure,
- la balance étant destinée à recevoir sur ledit support (4), lors de l'utilisation, un récipient (20) pour contenir un article ou un ingrédient,
**caractérisé en ce que** ledit boîtier (1) comprend des moyens de liaison (11) audit support (4) permettant audit support (4) de recevoir ledit récipient (20) selon les deux positions suivantes:
- Une position de stockage dans laquelle le récipient (20) est maintenu attaché au support (4) quelle que soit la position de la balance dans l'espace,
- Une position d'utilisation dans laquelle le récipient (20) est posé non attaché sur le support (4).

2. Balance de ménage selon la revendication précédente où lesdits moyens de liaison (11) exercent une force magnétique et où le récipient comporte des moyens de liaison complémentaires (21, 22) subissant ladite force magnétique, de sorte que ladite force magnétique permet de retenir le récipient (20) uniquement lorsque celui-ci est en position de stockage.

3. Balance de ménage selon la revendication précédente où
- les moyens de liaison (11) comprennent au moins un aimant (11) permanent.
- Les moyens de liaison complémentaires (21, 22) comprennent au moins une partie (21, 22) composée de matériau ferromagnétique.

4. Balance de ménage selon l'une des revendications précédentes où :
- ledit support (4) présente une première surface plane (S1) et un premier chanfrein (41) périphérique à la première surface plane (S1) et ledit au moins un aimant (11) est agencé adjacent au chanfrein, et où
- le récipient (20) présente une deuxième surface plane (S2) et un deuxième chanfrein (21) périphérique à la deuxième surface plane (S2) et où ladite au moins une partie (21) est agencée à sa périphérie.

5. Balance de ménage selon la revendication précédente où ledit au moins un aimant (11) présente une forme parallélépipédique dont au moins une face (11 a) est sensiblement parallèle audit premier chanfrein (41).

6. Balance de ménage selon la revendication précédente où
- les moyens de liaison (11) comprennent au moins deux aimants permanents (11),
- les moyens de liaison complémentaires (21) comprennent au moins deux parties (21) métalliques,
- les aimants (11) et parties (21) métalliques étant agencés pour que l'aimant (11) et la partie (21) métallique de chaque couple soient en regard l'un de l'autre en position de stockage.

7. Balance de ménage selon la revendication précédente où les aimants (11) et parties (21) métalliques sont répartis régulièrement sur la périphérie du support et du récipient.

8. Balance de ménage selon l'une des revendications précédentes où le premier chanfrein (41) et le deuxième chanfrein (21) sont orientés pour être sensiblement parallèles en position de stockage.

9. Balance de ménage selon l'une des revendications précédentes où le premier chanfrein (41) et le deuxième chanfrein (21) sont orientés selon un angle (α) compris entre 20° et 70° par rapport aux surfaces planes (S1, S2) en position d'utilisation, plus particulièrement entre 40° et 50°, par exemple égal à 45°.

10. Balance de ménage selon la revendication précédente où le support (4) a une forme de disque avec une périphérie en chanfrein et où le récipient (20) a une forme de disque avec une périphérie en chanfrein.

11. Balance de ménage selon l'une des revendications 6 à la précédente où le nombre d'aimants est supérieur à trois, par exemple égal à cinq.

12. Balance de ménage selon l'une des revendications 3 à la précédente où au moins le deuxième chanfrein (21) périphérique est entièrement métallique, plus particulièrement tout le récipient (20) est métallique.

13. Balance de ménage selon l'une des revendications 1 ou 2 où
- ledit support (4) présente une première surface plane (S1) et lesdits moyens de liaison (11) sont agencés adjacents à ladite surface plane (S1), et où
- ledit récipient (20) présente un fond plan (22) et une paroi inclinée (23), ladite au moins une partie (22) composée de matériau ferromagnétique étant agencée au niveau dudit fond plan (22).

14. Balance de ménage selon la revendication précédente où ledit récipient (20) comprend entre ladite paroi inclinée (23) et le fond plan (22) des moyens de distanciation (24) du support (4) permettant d'écarter le fond plan (22) de la première surface plane (S1) d'une distance (d) comprise entre 2mm et 5mm en position d'utilisation.

15. Balance de ménage selon la revendication précédente où lesdits moyens de distanciation (24) comprennent des plis en protubérance (24) par rapport au fond plan (22) destinés à prendre contact avec le support (4) en position d'utilisation.

16. Balance de ménage selon la revendication précédente où la première surface plane (S1) a une forme circulaire et le récipient (20) a une forme de disque avec une périphérie en paroi inclinée, le diamètre le plus grand de la paroi inclinée (23) étant supérieur à celui de la première surface plane (S1).

17. Balance de ménage selon l'une des revendications 13 à la précédente où au moins le fond plan (22) est entièrement métallique, plus particulièrement tout le récipient (20) est métallique.

18. Balance de ménage selon l'une des revendications précédentes où elle comprend sur le boîtier (1) un moyen d'accrochage (5).

19. Ensemble comprenant une balance (10) de ménage et au moins un récipient (20) selon l'une quelconque des revendications précédentes.
